# EUROPEAN PATENT APPLICATION

(11) **EP 2 772 967 A1**
(43) Date of publication of application: **03.09.2014**
(21) Application number: 12844324.9
(22) Date of filing: 29.10.2012
(51) Int. Cl.: H01M 4/13, C01B 31/02, H01G 11/22, H01M 4/139, H01M 4/36, H01M 4/485, H01M 4/587, H01M 4/62

(54) **SHEET-SHAPED COMPOSITE, MANUFACTURING METHOD FOR SAME, AND ELECTRODE AND ELECTROCHEMICAL ELEMENT USING SAID COMPOSITE**

(30) Priority: 29.10.2011 JP 2011238056; 29.10.2011 JP 2011238057
(71) Applicant: Nippon Chemi-Con Corporation, Tokyo 141-8605 (JP)
(72) Inventor: SUEMATSU, Shunzou, Tokyo 141-8605 (JP); HORII, Daisuke, Tokyo 141-8605 (JP); NAOI, Katsuhiko, Fuchu-shi Tokyo 183-8538 (JP); NAOI, Wako, Kunitachi-shi Tokyo 186-0002 (JP)
(74) Representative: Eisenführ Speiser
(86) International application number: PCT/JP2012/077866
(87) International publication number: WO 2013/062126

(57) **Abstract**

The present invention relates to a sheet composite of a metal oxide active material and a fibrous carbon that can yield an electrode or an electrochemical element which achieves output property and high energy density, as well as a manufacturing method thereof. The present invention is a sheet composite of a composite material of a metal compound capable of occluding and releasing lithium supported on a carbon material molded in a sheet-shape with a fibrous carbon binder, wherein the fibrous carbon binder of the composite material comprises any of carbon nanotubes, carbon nanofibers, and carbon fibers having a specific surface area of less than 600 m²/g.

## Description

### TECHNICAL FIELD

The present invention relates to a sheet composite of a composite material of an electrode active material and a carbon material molded in a sheet-shape with a fibrous carbon binder, a manufacturing method thereof, and an electrode and an electrochemical element employing this sheet composite.

### BACKGROUND ART

Carbon materials etc. that store and release lithium are currently being used as electrodes for lithium batteries, though, since their redox potentials are lower than the reduction potential of the electrolytic solution, there is a possibility that the electrolytic solution will degrade. Accordingly, lithium titanate which has a redox potential higher than the reduction potential of the electrolytic solution is under investigation, but lithium titanate has a problem of low output property. Meanwhile, there is an attempt to nanosize lithium titanate to improve output property. However, reducing the carbon content in a composite of lithium titanate nanoparticles and carbon is challenging, and improving the capacitance property was difficult.

Accordingly, a method of obtaining dispersed lithium titanate supported on carbon by applying sheer stress and centrifugal force to a reactant in a rotating reactor to promote chemical reaction (generally referred to as a mechanochemical reaction) is known. (see e.g. Patent Documents 1 and 2)

### [Related Technical Documents]

### [Patent Documents]

Patent Document 1: JP 2007-160151
Patent Document 2: JP 2008-270795

An electrode that uses carbon supporting lithium titanate nanoparticles described in Patent Literatures 1 and 2 exerts superior output property, however, there is recently a demand for further improving output property and improving electric conductivity in this type of electrode.

In a conventional composite electrode of a metal oxide active material and a fibrous carbon, an organic binder such as polyvinylidene fluoride (hereinbelow PVDF) was utilized as the binder for preparing the electrode. However, since an organic binder is an insulant, there was a problem that this becomes a factor for reducing output property and energy density. Accordingly, there is an increasing expectation for an electrode that does not utilize an organic binder.

The present invention is proposed to solve the problems of the conventional technology described above, the object of which is to provide a sheet composite that can yield an electrode or an electrochemical element which achieves output property and high energy density by molding a composite material of a metal compound capable of occluding and releasing lithium supported on a carbon material into a sheet-form with a fibrous carbon binder, without using an organic binder, as well as a manufacturing method thereof. In addition, another object of the present invention is to provide an electrode and an electrochemical element employing the sheet composite.

### SUMMARY OF THE INVENTION

In order to achieve the above objectives, the sheet composite of the present invention comprises a composite material of a metal compound capable of occluding and releasing lithium supported on a carbon material, and the composite material is molded in a sheet-shape with a fibrous carbon binder comprising any of carbon nanotubes, carbon nanofibers, and carbon fibers having a specific surface area of less than 600 m²/g.

In another aspect of a sheet composite according to the present invention, 7 wt% to 200 wt% of the fibrous carbon binder may be added to the composite material.

In another aspect of the present invention, the thickness of the sheet composite may be 20 µm to 60 µm.

In another aspect of the present invention, An electrode comprises a collector and the sheet composite formed on a surface of the collector.

An electrochemical element employing the electrode is also one aspect of the present invention.

Moreover, the method for manufacturing the sheet composite of the present invention comprises a compositing treatment of supporting a metal compound capable of occluding and releasing lithium on a carbon material to obtain a composite material, a stirring treatment of producing a mixed solution by stirring the composite material with a fibrous carbon binder, and a sheeting treatment of molding the stirred mixed solution in a sheet-shape to obtain a sheet composite, wherein the fibrous carbon binder comprises any of carbon nanotubes, carbon nanofibers, and carbon fibers having a specific surface area of less than 600 m²/g.

It is also one aspect of the present invention that in the compositing treatment, sheer stress and centrifugal force is applied to a starting material for the metal compound capable of occluding and releasing lithium and a carbon material in a rotating reactor, and a mixture thereof is heated to obtain a composite material having a metal compound capable of occluding and releasing lithium supported on a carbon material.

According to the present invention, a sheet composite with a non-organic fibrous carbon binder added to a composite material consisting of a metal compound capable of occluding and releasing lithium and a carbon material and molded in a sheet-shape shows high rate property, high output property, and high capacitance property. Moreover, an electrode and an electrochemical element employing the sheet composite can also realize similar effects.

### BRIEF DESCRIPTION OF THE DRAWINGS

Figs. 1A and 1B are photographis showing the state of the sheet of the Example in the first property comparison in the embodiments of the present invention.
Fig. 2 is a photograph showing the state of the sheet of the Comparative Example in the first property comparison in the embodiments of the present invention.
Fig. 3 is a schematic diagram showing the state of the sheet of the Example in the embodiments of the present invention.
Fig. 4 is a graph showing the results of rate property evaluation of the fourth property comparison (LFP/CNF) in the embodiments of the present invention.
Fig. 5 is a graph showing the results of rate property evaluation of the fourth property comparison (LFP/KB) in the embodiments of the present invention.
Figs. 6A, 6B and 6C are graphs showing the result of charge and discharge measurement at the C rate range of the fifth property comparison in the embodiments of the present invention.
Fig. 7 is a graph showing the result of charge and discharge measurement at 200 C of the sixth property comparison in the embodiments of the present invention.
Fig. 8 is a graph showing the result of charge and discharge measurement at 100 C of the seventh property comparison in the embodiments of the present invention.
Fig. 9 is a perspective view showing an example of a reactor used in the manufacturing method of the present invention.

### DESCRIPTION OF EMBODIMENTS

The embodiments for carrying out the present invention will now be described below. It is noted that the present invention is not to be limited to the embodiments described below.

The sheet composite of a metal compound capable of occluding and releasing lithium (hereinbelow, referred to as "metal compound") and a fibrous carbon binder (hereinbelow, referred to as "fibrous carbon") according to the present embodiment is:
(1) In the compositing treatment of the composite material, a starting material for the metal compound is added to a carbon material, and this is subjected to an Ultra-Centrifugal force processing method which is a mechanochemical reaction (hereinbelow referred to as UC treatment) to prepare a composite material of metal compound and carbon material.
(2) In the sheeting treatment of the composite material, a mixed solution is prepared by adding a fibrous carbon as the binder and a solvent to this composite material and stirring, and this mixed solution is molded in a sheet-shape to prepare a sheet composite.

The metal compound, the carbon material, and the fibrous carbon used in the present embodiment will be described below, and manufacturing steps (1) and (2) will be described in detail.

The metal compound, the carbon material, and the fibrous carbon used in the present embodiment are those having the following characteristics.

### (Metal Compound)

As examples of the metal compound used in the present embodiment, Li_{α}M_{β}Y_{γ} which are (a) oxide metal compounds such as LiCoO₂, Li₄Ti₅O₁₂, SnO₂, and SiO (M = Co, Ni, Mn, Ti, Si, Sn, Al, Zn, Mg, and Y = O) , (b) oxysalt metal compounds such as (M = Fe, Mn, V, and Y = PO₄, SiO₄, BO₃, P₂O₇) , and (c) nitride metal compounds such as Li_{2.6}Co_{0.4}N (M = Ni, Co, Cu, and Y = N) can be used. In addition, M_{α}M'_{β} which are metals such as Si, Sn, and Ge (M = Sn, Sb, Si and M' = Fe, Co, Mn, V, Ti) and alloys such as Sn₃V₂ and Sb₃Co can be used.

As an example of such a metal compound, lithium titanate (hereinbelow LTO) can be used. As LTO, LTO produced by mixing a titanium source and a lithium source and subjecting to UC treatment can be utilized. A titanium (IV) tetrabutoxy monomer (Ti[O(CH₂)₃CH₃]₄, Wako Pure Chemical Industries, Ltd., First Class Grade) can be employed as the titanium source. Other than the titanium (IV) tetrabutoxy monomer, isopropyl alkoxide and titanium chloride etc. can be utilized. The titanium source solution is prepared by adding acetic acid (CH₃COOH, Kanto Chemical, Co., Inc., Special Grade) as the chelating reagent and isopropyl alcohol ( (CH₃)₂CHOH, Wako Pure Chemical Industries, Ltd., for Organic Synthesis) as the solvent. Meanwhile, lithium acetate (CH₃COOLi, Wako Pure Chemical Industries, Ltd., Special Grade) can be employed as the lithium source. Examples of the lithium source other than lithium acetate that can be utilized are lithium hydroxide and lithium carbonate. The Li source solution is prepared by dissolving lithium acetate in a mixed solution of distilled water, acetic acid, and isopropyl alcohol.

### (Carbon Material)

Examples of the carbon material used in the present embodiment are carbon nanotubes (hereinbelow CNT) or carbon nanofibers (hereinbelow CNF) which have a fibrous structure, Ketjen Black (hereinbelow KB) which is carbon black having a hollow shell structure, carbon black such as acetylene black, amorphous carbon, carbon fiber, natural graphite, artificial graphite, activated carbon, and mesoporous carbon. The carbon material is made into a composite material by mixing with a starting material for the metal compound and subjecting to UC treatment.

### (Fibrous Carbon)

As the fibrous carbon binder used in the present embodiment, carbon nanotubes (hereinbelow CNT) having a fiber diameter of 1 to 10 nm are used. Moreover, other than CNT, carbon nanofibers (hereinbelow, referred to as "CNF") having a fiber diameter of 10 to 1000 nm as well as carbon fibers (hereinbelow, referred to as "CF") having a fiber diameter of greater than 1 µm, about 10 µm, and at maximum 100 µm can be used as the fibrous carbon. The fibrous carbon acts as the binder by mixing into the composite material when molding a composite material into a sheet. In addition, the fibrous carbon employed in the present embodiment is those having a specific surface area of less than 600 m²/g.

Manufacturing steps (1) and (2) of the composite of the present embodiment will be described below in detail.

### (1) Compositing Treatment of Composite Material

The composite material used in the treatment of the present embodiment is prepared by adding a starting material for the metal compound to a carbon material and subjecting to UC treatment to allow conjugation. In addition, when the carbon material has a fibrous structure (such as CNT and CNF) , ultrahigh pressure dispersion treatment may also be applied with the objective to disperse and homogenize the fibrous structure.

In other words, as an example of the compositing treatment of the composite material when the carbon material has a fibrous structure is as follows:
(a) a carbon material having a fibrous structure is dispersed (as ultrahigh pressure dispersion treatment),
(b) a starting material for the metal compound is added to the carbon material dispersed by the ultrahigh pressure dispersion treatment to perform UC treatment which is a mechanochemical reaction (as UC treatment),
(c) the product obtained through the treatments (a) and (b) is dried and then calcinated to prepare a composite material of metal compound and carbon material.

### (a) Ultrahigh Pressure Dispersion Treatment

The treatment of dispersing the carbon material having fibrous structure by an "ultrahigh pressure dispersion treatment" includes: (a) a mixing treatment; and (b) an ultrahigh pressure dispersion treatment.

### (a) Mixing Treatment

In the mixing treatment, a carbon material having a fibrous structure and a solvent are mixed to produce a mixed solution. A known method can be employed as the method for mixing the carbon material and the solvent. An example includes mixing by a homogenizer. The ratio of the carbon material and the solvent is preferably 1 L of the solvent to 0.5 to 1 g of the carbon material.

A homogenizer is a type of generator that includes: a drive unit; a fixed outer blade; and a rotating inner blade, and performs a line of homogenation via high-speed dispersion - microgrinding - uniformalization. As a result, even dispersion of the composite material and the fibrous carbon binder in the solvent, as well as microgrinding of the fibrous carbon binder are achieved.

As the solvent to be mixed with the carbon material having fibrous structure, alcohols, water, and a mixed solvent thereof can be employed. For example, isopropyl alcohol can be used as the solvent. When IPA is utilized as the solvent, an advantageous effect of suppressing the aggregation of the carbon material having fibrous structure can take effect.

### (b) Ultrahigh Pressure Dispersion Treatment

In the ultrahigh pressure dispersion treatment, a known method generally referred to as jet mixing (jet flow impact mixing) is employed. In other words, a pair of nozzles is set up in a position facing each other on the inner wall of a tubular chamber, and a mixed solution of the carbon material having fibrous structure pressurized by a high-pressure pump is injected from each nozzle and allowed to collide head-on in the chamber. This allows the carbon material bundles to be crushed and enables dispersion and uniformalization. As an example, the treatment of the carbon material is performed at a pressure and concentration of 200 MPa, 3 Pass, and 0.5 g/L.

Moreover, when employing a carbon material other than the carbon material having fibrous structure as the composite material, as a pretreatment instead of treatments (a) and (b) , the carbon material is added to a solvent such as IPA and mixed to produce a mixed solution. A known method can be employed as the method for mixing this mixed solution. An example includes mixing by a homogenizer. The ratio of the carbon material and the solvent is preferably 1 L of the solvent to 0.5 to 1 g of the carbon material.

### (b) UC Treatment

In the UC treatment, a metal alkoxide, a lithium compound, and a reaction suppressor are added to a mixed solvent having the carbon material after pretreatment dispersed and subjected to an UC treatment. In the UC treatment, a metal alkoxide, which is a starting material for the metal oxide active material that is the metal compound, a lithium compound, and a reaction suppressor are added to the carbon material obtained through the ultrahigh pressure dispersion treatment, and subjected to UC treatment which is a mechanochemical reaction. The metal alkoxide, the lithium compound, and the reaction suppressor will be described below.

### (Metal Alkoxide)

As the metal alkoxide used in the present embodiment, a metal alkoxide capable of occluding and releasing lithium is used. This metal alkoxide is preferably titanium alkoxide, and preferably those where the reaction rate constant of the metal alkoxide hydrolysis reaction is 10⁻⁵mol⁻¹sec⁻¹ or higher.

### (Lithium Compound)

Lithium acetate (CH3COOLi, Wako Pure Chemical Industries, Ltd., Special Grade) can be employed as the lithium compound. Examples of the lithium source other than lithium acetate that can be utilized are lithium hydroxide, lithium carbonate, and lithium nitrate. A lithium compound solution can be prepared by dissolving lithium acetate in a mixed solution of distilled water, acetic acid, and isopropyl alcohol.

### (Reaction Suppressor)

When titanium alkoxide is employed as the metal alkoxide, there was a problem that lithium titanate may not be prepared because the reaction was too fast and titanium oxide was formed during preparing lithium titanate.

Accordingly, by adding a given compound that forms a complex with titanium alkoxide as the reaction suppressor, the chemical reaction can be suppressed from being excessively promoted. Substances that can form a complex with titanium alkoxide include complexing agents represented by carboxylic acids such as acetic, citric, oxalic, formic, lactic, tartaric, fumaric, succinic, propionic, and levulinic acids, amino polycarboxylic acids such as EDTA, and aminoalcohols such as triethanolamine.

### (UC Treatment)

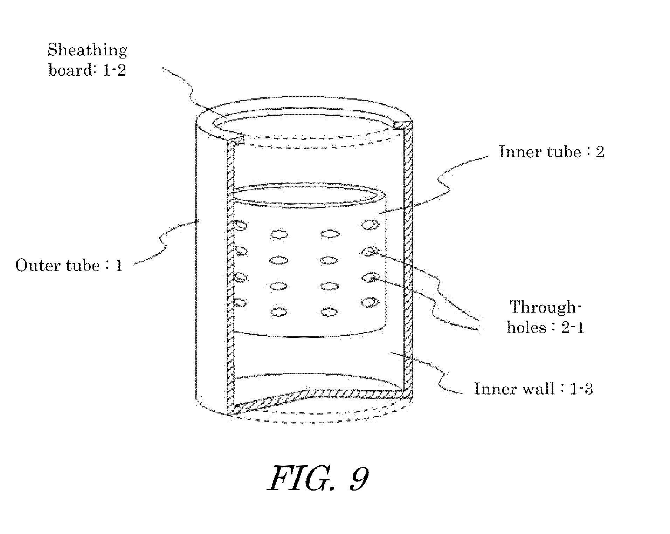

The UC treatment of the present embodiment can be performed with e.g. a reactor as shown in Figure 9. As shown in Figure 9, the reactor consists of an outer tube 1 having a sheathing board 1-2 at the opening and a rotating inner tube 2 having through-holes 2-1. By introducing the reactant inside the inner tube 2 of this reactor and rotating the inner tube 2, the reactant inside the inner tube 2 is transferred through the through-holes 2-1 of inner tube 2 to the inner wall 1-3 of the outer tube 1 by its centrifugal force. At this time, the reactant collides with the inner wall 1-3 of the outer tube 1 due to the centrifugal force of the inner tube 2, and slides up to the upper portion of the inner wall 1-3 in a thin film state. In this state, the sheer stress with the inner wall 1-3 and the centrifugal force from the inner tube 2 are both simultaneously applied to the reactant, and a large mechanical energy is thereby applied to the thin film reactant. This mechanical energy is thought to be converted into the chemical energy necessary for reaction, the so-called activation energy. As a result, the reaction proceeds in a short period of time.

In this reaction, since the mechanical energy applied to the reactant will be large when in a thin film state, the thickness of the thin film is 5 mm or less, preferably 2.5 mm or less, and further preferably 1.0 mm or less. The thickness of the thin film can be set by the width of the sheathing board and the amount of the reaction solution.

Moreover, it is thought that the reaction method of the present embodiment can be realized by the mechanical energy of sheer stress and centrifugal force applied to the reactant, and this sheer stress and centrifugal force are generated by the centrifugal force applied to the reactant inside the inner tube. Accordingly, the centrifugal force applied to the reactant inside the inner tube necessary for the present embodiment is 1500 N (kgms⁻²) or higher, preferably 70000 N (kgms⁻²) or higher, and further preferably 270000 N (kgms⁻²) or higher.

The reaction method of the present embodiment above can be applied to various reactions such as a hydrolysis reaction, an oxidation reaction, a polymerization reaction, and a condensation reaction, as long as it is a liquid phase reaction.

Among these, by applying this to the production of a metal compound by a metal salt hydrolysis reaction and a condensation reaction, which were conventionally performed with a sol-gel method, uniform nanoparticles of a metal compound can be formed.

The above metal compound nanoparticles act as a favorable active material for an electrode for an electrochemical element. In other words, specific surface area will be markedly expanded and output property and capacitance property will be improved by nanosizing.

Further, in the production reaction of a metal oxide by such a metal salt hydrolysis reaction and condensation reaction, by adding a carbon material during the reaction process, a carbon material supporting highly dispersed metal compound nanoparticles can be obtained. In other words, a starting material for the metal compound and a carbon material are introduced into the inner tube of the reactor of Figure 9, and the inner tube is rotated to mix and disperse the starting material for the metal compound and the carbon material. A catalyst such as sodium hydroxide is further introduced while the inner tube is being rotated so that the hydrolysis and condensation reactions proceed to produce a metal compound, and this metal compound and the carbon material are mixed in a dispersed state. A carbon material supporting highly dispersed metal compound nanoparticle precursor can be formed with the end of the reaction.

In the present embodiment, it is desirable to allow a highly dispersed metal oxide active material nanoparticle precursor to be supported on a carbon material by a two-step UC treatment. In other words, as a first UC treatment, a carbon material, a metal alkoxide, and isopropyl alcohol are introduced into the inner tube of the reactor, and the inner tube is rotated to yield a mixed solution of evenly dispersed carbon material and metal alkoxide.

Further, as a second UC treatment, a mixed solution comprising a lithium compound, a reaction suppressor, and water is introduced while rotating the inner tube to thereby promote the chemical reaction between the metal alkoxide and the lithium compound, and a carbon material supporting highly dispersed metal compound precursor capable of occluding and releasing lithium is obtained with the end of the reaction.

Accordingly, since the metal alkoxide and the carbon material are dispersed before starting the chemical reaction with the metal compound capable of occluding and releasing lithium, the metal compound precursor capable of occluding and releasing lithium will be evenly dispersed and supported on the carbon material, and thus aggregation of metal compound nanoparticles will be prevented and output property will be improved.

Further, the carbon material supporting a dispersed metal compound precursor capable of occluding and releasing lithium can also be produced by a one-step UC treatment. In such a case, a carbon material, a metal alkoxide, a reaction suppressor, and water are introduced into the inner tube of the reactor, and the inner tube is rotated to allow mixing and dispersion thereof, while at the same time hydrolysis and condensation reactions are allowed to proceed to promote chemical reaction. A carbon material supporting a dispersed metal compound precursor capable of occluding and releasing lithium can be obtained with the end of the reaction.

### (c) Drying/Calcination Treatment

In the drying/calcination treatment, the product (mixture) obtained through UC treatment is vacuum dried and then calcinated to prepare a composite material of metal compound and carbon material.

### (Drying)

A mixed solution of the carbon material supporting highly dispersed metal compound precursor obtained by the UC treatment is dried in the range of 85°C to 100°C. This leads to prevention of aggregation of the metal compound as well as improvement of the capacity and output property of electrodes or electrochemical elements that use the electrode material of the present embodiment.

### (Calcination Treatment)

The dried carbon material supporting highly dispersed metal compound precursor is subjected to a two-step calcination of e.g. at 300°C for 1 hour and at 900°C for 4 minutes, thereby yielding a composite powder of highly dispersed metal compound nanoparticle supported on carbon material. Further, a short-duration calcination at a high temperature of 900°C yields a metal compound of even composition. As a result, aggregation of the metal compound is prevented, and a composite material of metal compound and carbon material which is crystalline nanoparticles with small particle size can be prepared.

### (2) Sheeting Treatment of Composite Material

In the sheeting treatment, the composite material of metal compound and carbon material after the compositing treatment of the composite material and a binder which is a fibrous carbon are added to the solvent and stirred to produce a slurried mixed solution. As a result, even dispersion of the composite material and the fibrous carbon in the solvent, as well as microgrinding of the fibrous carbon are achieved. This mixed solution is molded in a sheet-shape, dried under reduced pressure, and made into a sheet.

In other words, as an example of a sheeting treatment,
(a) a fibrous carbon binder may be dispersed by ultrahigh pressure dispersion treatment (pretreatment):
(b) a mixed solution of a composite material added to the fibrous carbon dispersed by the ultrahigh pressure dispersion treatment may be stirred (stirring treatment);, and
(c) the stirred mixed solution may be molded in a sheet-shape, dried under reduced pressure, and made into a sheet to prepare a sheet composite (sheeting treatment).

### (a) Pretreatment

The pretreatment of dispersing a fibrous carbon binder by ultrahigh pressure dispersion treatment is similar to the pretreatment (a) during the compositing treatment of the composite material described above. By this pretreatment, a fibrous carbon binder and IPA are mixed to produce a mixed solution, and ultrahigh pressure dispersion treatment is applied to this mixed solution to yield a mixed solution containing dispersed fibrous carbon binder.

### (b) Stirring Treatment

To the mixed solution containing dispersed the fibrous carbon binder after pretreatment (a) during the sheeting treatment, the composite material after the compositing treatment of the composite material (1) is added and stirred to produce a slurried mixed solution.

A homogenizer can be utilized for stirring the mixed solution. A homogenizer is a type of generator, consists of a drive unit, a fixed outer blade, and a rotating inner blade, and performs a line of homogenation via high-speed dispersion - microgrinding - uniformalization. As a result, even dispersion of the composite material and the fibrous carbon binder in the solvent, as well as microgrinding of the fibrous carbon binder are achieved.

### (c) Sheeting Treatment

In the sheeting treatment, the mixed solution after the stirring treatment is molded and made into a sheet. When molding, the mixed solution is made into a sheet by filtering under reduced pressure with a PTFE filter paper (diameter: 35 mm, average pore size 0.2 µm) . This sheet is dried under reduced pressure at 60°C for 3 hours. A sheet composite of a composite material and a fibrous carbon can be formed by the treatment above. This sheet composite is subjected to a roller treatment such as pressing if necessary.

### (Electrode)

The sheet composite of the composite material and the fibrous carbon is cut into the same size as a collector of a metal foil such as an aluminum foil, placed on top of the collector, sandwiched with a separately prepared metal foil placed on top thereof, and pressed at a pressure of 10 t/cm² for 1 minute from above and under the metal foil to unify the collector with the sheet composite. A sheet composite unified with the collector as such can be made into an electrode of an electrochemical element, i.e. an electrical energy storage electrode, and this electrode shows high output property and high capacitance property.

A foil consisting of metal materials such as aluminum, copper, and platinum is employed as the collector, and an etched foil having dents and bumps formed by etching treatment or a plain foil having a flat surface is employed on the surface. The pressing pressure for unifying the collector and the sheet composite is preferably 0.01 to 100 t/cm², and by this pressing, the pressure is applied to the dents and bumps of the surface-expanded etched aluminum foil so that the bumps bite into the molded sheet composite or a portion of the sheet composite is pinched in the dents, and superior conjugation can be rendered.

### (Electrochemical Element)

An electrochemical element that can employ this sheet composite and an electrode employing this sheet composite is an electrochemical capacitor or battery that employs an electrolytic solution containing ions of metals such as lithium or magnesium. In other words, the electrode of the present embodiment can occlude and desorb metal ions, and works as a negative or positive electrode. For example, an electrochemical capacitor or battery can be configured by laminating the electrode of the present embodiment with an electrode which will be the counter electrode such as an activated carbon, a carbon from which metal ions occlude and desorb, or a metal oxide (with a separator in between), and employing an electrolytic solution containing a metal ion.

### EXAMPLES

### [First Property Comparison (Property Comparison by Presence or Absence of Binder)]

In the first property comparison, the property comparison was made according to the presence or absence of a binder added to the composite material which is a fibrous carbon. Example 1 and Comparative Example 1 used in the first property comparison are as follows. In this property comparison, LTO is used as the metal compound, CNF is used as the carbon material, and CNT is used as the fibrous carbon added as the binder to this composite material.

### (Example 1)

In Example 1, a mixed solution of CNF dispersed in IPA was produced by jet mixing, the mixed solution, titanium alkoxide, and IPA were introduced into the inner tube of the reactor for carrying out an UC treatment, a first UC treatment was performed, a lithium compound, a reaction suppressor, and water were further introduced, and a second UC treatment was performed to yield CNF supporting highly dispersed LTO precursor. This CNF supporting highly dispersed LTO precursor was dried at 90°C, and further calcinated under nitrogen atmosphere at 900°C to yield a composite material of CNF supporting highly dispersed lithium titanate nanoparticles.

Next, a mixed solution of a CNT binder dispersed in IPA was produced by jet mixing, the composite material was added to this mixed solution and stirred to prepare a slurried mixed solvent, this was filtered under reduced pressure with a PTFE filter paper (diameter: 35 mm, average pore size 0.2 µm) , and molded to yield a sheet. This sheet was then dried under reduced pressure at 60°C for 3 hours to form a sheet composite.

### (Comparative Example 1)

Comparative Example 1 was similar to Example 1, except that it did not employ a binder upon molding while Example 1 employs a CNT binder upon molding to form a sheet composite.

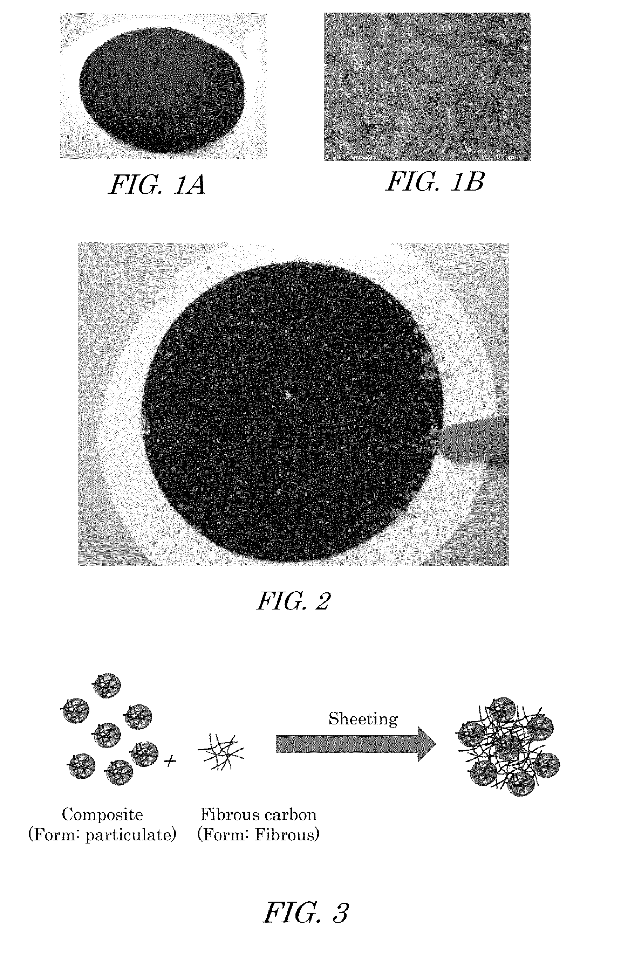

A photograph representing the state of the sheet composite of Example 1 prepared as such is shown in Figure 1, and a photograph indicating the state of the sheet composite of Comparative Example 1 is shown in Figure 2. Figure 1A is a photograph showing the state of the sheet composite of Example 1, and Figure 1B is an SEM image of the backside of the sheet composite of Example 1. It is seen from Figure 1A that due to the fibrous CNT acting the binder on the particulate composite material, Example 1 with CNT added as the binder became a self-standing sheet. In addition, it is seen from Figure 1B that composite material particles are not exposed on the surface of the sheet composite because the particulate composite material is evenly placed in the self-standing sheet.

Meanwhile, Figure 2 is a figure showing the state of the sheet composite of Comparative Example 1. It is seen from Figure 2 that in Comparative Example 1 which did not use a fibrous carbon binder, there was merely an accumulation of a composite material of particulate LTO and CNF. It is seen that since the composite material of LTO and CNF do not have e.g. adherence, attachment, and conjugation effects per se, it is not unified and a sheet is not formed.

In other words, as shown in the schematic diagram of Figure 3 showing the state of the sheet of the Example, in a sheet composite utilizing CNT as the binder, the fibrous CNT binder is entwined and the carbon material supporting nanoparticulate LTO (composite material) is incorporated therebetween. As a result, a self-standing sheet with strength can be prepared. Moreover, a similar effect can also be realized with an electrode and an electrochemical element and an electrode and an electrochemical element employing this sheet composite.

From the above, by adding a fibrous carbon as the binder to a composite material of metal compound and carbon material, a sheet composite as well as an electrode and an electrochemical element employing the sheet composite can be formed, wherein the composite material of the metal compound and the carbon material are evenly placed.

### [Second Property Comparison (Property Comparison by Type of Binder)]

In the second property comparison, the property comparison was made according to the types of binder added to the composite material. Example 2 and Comparative Example 2 used in the second property comparison are as follows. In this property comparison, LTO is used as the metal compound, CNF is used as the carbon material, and CNT is used as the fibrous carbon added as the binder to the composite material.

### (Example 2)

In Example 2, the sheet composite formed in Example 1 was treated with a roller, this sheet composite was pressed and unified with an etched aluminum foil to prepare an electrode, and an electrochemical cell was prepared by facing this against a lithium foil which will be the counter electrode via a separator employing an electrolytic solution of 1 mole of LiBF₄ as the electrolyte added to 1 L of propylene carbonate (PC) solvent (1M LiBF₄/PC).

### (Comparative Example 2)

In Comparative Example 2, a mixed aqueous solution of the composite material described in Example 1 mixed with an organic binder carboxymethylcellulose (CMC) as the binder was prepared, this mixed aqueous solution was applied on an etched aluminum foil, and the solvent (water) was removed to prepare a coated electrode having a coating layer formed on an aluminum foil surface. An electrochemical cell was prepared by facing this coated electrode against a lithium foil which will be the counter electrode via a separator employing an electrolytic solution of 1 mole of LiBF₄ as the electrolyte added to 1 L of propylene carbonate (PC) solvent (1M LiBF₄/PC).

### [Rate Property]

Charge and discharge measurement at an electrode potential of 1.0 to 3.0 V and a C rate of 100 C was performed on the cells of Example 2 and Comparative Example 2 prepared as such, and results as shown in Table 1 were obtained.

**[Table 1]**

| | **Electrode** | **Binder** | **Capacity Density /mAhg⁻¹** |
|---|---|---|---|
| **Comparative Example 2** | **LTO/CNF** | **Organic binder** | **60** |
| **Example 2** | **LTO/CNF** | **CNT binder** | **78** |

As apparent from Table 1, it is seen that Example 2 will have a higher capacity density compared to Comparative Example 2. In other words, it is seen that an electrode employing a sheet composite with CNT added as the binder to a composite material of a metal compound and CNF will have a larger capacity per unit compared to a coated electrode utilizing an organic binder (CMC) as the binder.

From the above, by adding a fibrous carbon as the binder to a composite material of metal compound and carbon material, a sheet composite as well as an electrode and an electrochemical element employing the sheet composite showing property with high capacity per unit can be formed.

### [Third Property Comparison (Property Comparison by Added Amount of Binder)]

In the third property comparison, the property comparison was made according to the amount of the fibrous carbon binder added to composite material. Examples 3 to 6 and Comparative Example 3 used in the third property comparison are as follows. In this property comparison, LTO is used as the composite material, CNF is used as the carbon material, and CNT is used as the fibrous carbon added as the binder to the composite material.

### (Examples 3 to 6 and Comparative Example 3)

Example 3 was prepared similarly to the sheet composite of Example 1. Here, the sheet composite was formulated so that the amount of the CNT binder added was 7 wt% of the composite material.

Example 4 was prepared similarly to the sheet composite of Example 1. Here, the sheet composite was formulated so that the amount of the CNT binder added was 14 wt% of the composite material.

Example 5 was prepared similarly to the sheet composite of Example 1. Here, the sheet composite was formulated so that the amount of the CNT binder added was 20 wt% of the composite material.

Example 6 was prepared similarly to the sheet composite of Example 1. Here, the sheet composite was formulated so that the amount of the CNT binder added was 200 wt% of the composite material.

In Comparative Example 3, similarly to Comparative Example 1, an attempt was made to prepare a sheet electrode that did not employ a binder when molding.

In these Examples 3 to 6 and Comparative Example 3, the amounts of lithium titanate nanopowder and CNF were adjusted so that the ratio between lithium titanate and CNF was 80:20.

### [Self-standing of Sheet]

The sheet composites of Examples 3 to 6 and Comparative Example 3 prepared as such were tested to see whether or not they are self-standing, and results as shown in Table 2 were obtained. I n the Table 2, "X" "Y" and "Z" respectively show the state of the sheets prepared. "X" means an even and self-standing sheet without unevenness on the surface. "Y" means a self-standing sheet but with unevenness on the surface. "Z" means a state where unification did not occur and a sheet was not formed.

**[Table 2]**

| | **Amount added to composite (wt.%)** | **LTO:CNF (wt. ratio)** | **State of self-stranding sheet** |
|---|---|---|---|
| | | | **CNT** |
| **Comparative Example 3** | **0** | **80:20** | **Z** |
| **Example 3** | **7** | **80:20** | **Y** |
| **Example 4** | **14** | **80:20** | **X** |
| **Example 5** | **20** | **80:20** | **X** |
| **Example 6** | **200** | **80:20** | **X** |

As apparent from Table 2, it is seen that the sheet is not unified and is not self-standing in Comparative Example 3. Observing the surface of the sheet of Example 3, unevenness can be seen on the surface. However, the sheet is self-standing albeit with unevenness. In the sheets of Examples 4 to 6, a composite material of particulate LTO and CNF becomes even by a fibrous CNT binder to form sheets without unevenness.

In particular, when preparing a proper sheet without unevenness, it is desirable that the amount of CNT added as the binder is 10 wt% or more of the composite material. Further, a more proper sheet can be prepared by having the amount of CNT at 14 wt% or more. In the meantime, when the sheet composite is made into an electrode, it is desirable that a large amount of LTO is added in order to improve the capacity density. Accordingly, it is desirable that the amount of CNT added as the binder is 50 wt% or less. For a higher capacity density, a sheet having high capacity density can be prepared by having the amount of CNT at 25 wt% or less.

From the above, by adding 7 wt% to 200 wt%, desirably 10 wt% to 50 wt%, and further desirably 14 wt% to 25 wt% a fibrous carbon as the binder to a composite material of LTO as the metal compound and a carbon material, a sheet composite as well as an electrode and an electrochemical element employing the sheet composite having high capacity density wherein the composite material of LTO and the carbon material is evenly placed can be formed.

### [Fourth Property Comparison (Property Comparison by Type of Fibrous Carbon)]

In the fourth property comparison, the rate property comparison was made according to the types of metal compound and carbon material. Examples 7 and 8 as well as Comparative Examples 4 and 5 used in the fourth property comparison are as follows.

### (Example 7)

In Example 7, a composite material of lithium iron phosphate (hereinbelow LFP) and CNF was used as the composite material of metal compound and carbon material.

### (Example 8)

In Example 8, a composite material of LFP and KB was used as the composite material of metal compound and carbon material.

20 wt% of CNT as the binder and IPA were added to these composite materials and stirred to prepare a mixed solution. This mixed solution was filtered under reduced pressure with a PTFE filter paper (diameter: 35 mm, average pore size 0.2 µm) . Subsequently, the mixed solution filtered under reduced pressure was molded to yield a sheet composite having a thickness of 40 to 45 µm. The sheet composite formed was treated with a roller, and this sheet composite was pressed and unified with an etched aluminum foil to prepare an electrode. An electrochemical cell was prepared by facing this electrode against a lithium foil which will be the counter electrode via a separator employing an electrolytic solution of 1 mole of LiBF₄ as the electrolyte added to 1 L of propylene carbonate (PC) solvent (1M LiBF₄/PC) as the electrolytic solution.

### (Comparative Example 4)

In Comparative Example 4, a composite material of LFP and CNF was used as the composite material of metal compound and carbon material.

### (Comparative Example 5)

In Comparative Example 5, a composite material of LFP and KB was used as the composite material of metal compound and carbon material.

5 wt% of PVDF which is an organic binder was mixed as the binder with these composite materials to prepare a mixed solution, and a coated electrode having a coating layer formed by this mixed solution on an aluminum foil surface was prepared. An electrochemical cell was prepared by facing this electrode against a lithium foil which will be the counter electrode via a separator employing an electrolytic solution of 1 mole of LiBF₄ as the electrolyte added to 1 L of propylene carbonate (PC) solvent (1M LiBF₄/PC) as the electrolytic solution.

### [Rate Property]

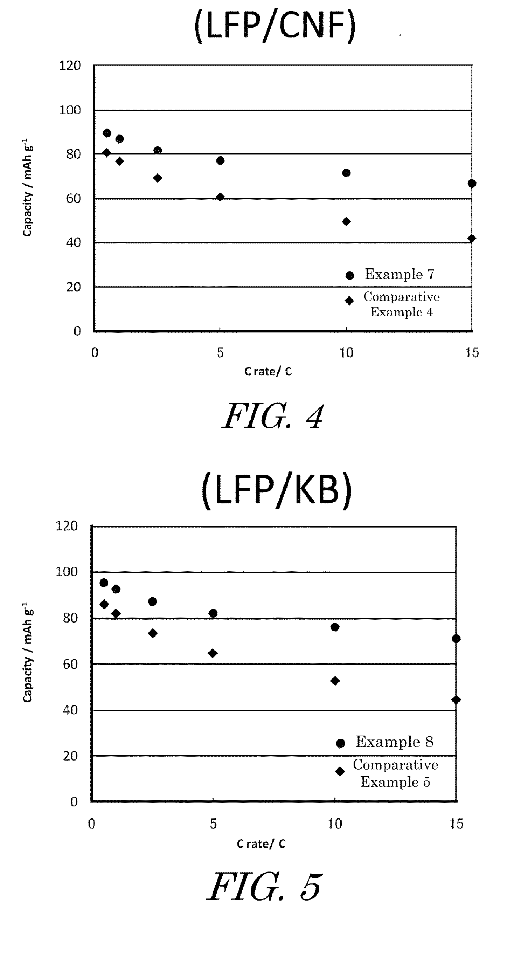

Charge and discharge measurement was performed on the cells of Examples 7 and 8 as well as Comparative Examples 4 and 5 prepared as such, and results as shown in Figures 4 and 5 were obtained. Figure 4 is a figure showing the rate property of electrodes using a composite material of LFP and CNF. Figure 5 is a figure showing the rate property of electrodes using a composite material of LFP and KB.

From Figure 4, it is seen that when LFP/CNF is used as the composite material, Example 7 having a fibrous carbon added as the binder to the composite material shows a higher rate property compared to Comparative Example 4 having an organic binder added as the binder.

From Figure 5, it is also seen that when LFP/KB is used as the composite material, Example 9 having a fibrous carbon added as the binder to the composite material shows a higher rate property compared to Comparative Example 5 having an organic binder added as the binder.

From the above, a sheet composite as well as an electrode and an electrochemical element employing the composite having high rate property can also be formed by adding a fibrous carbon as the binder to a composite material employing LFP as the metalized compound and employing CNF or KB as the carbon material.

### [Fifth Property Comparison (Property Comparison of Rate Property)]

In the fifth property comparison, properties were compared by the presence or absence of a binder added to the composite material. Examples 9 to 11 and Comparative Examples 6 to 8 used in the fifth property comparison are as follows. In this property comparison, LTO is used as the metal compound, CNF is used as the carbon material, and CNT is used as the fibrous carbon added as the binder to the composite material.

### (Examples 9 to 11)

The thickness of the sheet composite formed in Example 2 was set in each of Examples 9 to 11 to prepare electrochemical cells. In Example 9, the thickness of the sheet composite molded in a sheet-shape was 23 µm. In Example 10, the thickness of the sheet composite molded in a sheet-shape was 50 µm. In Example 11, the thickness of the sheet composite molded in a sheet-shape was 71 µm.

### (Comparative Examples 6 to 8)

The thickness of the coating layer of the coated electrode having CMC as the binder was each set similarly to Comparative Example 2 to prepare electrochemical cells. In Comparative Example 6, the thickness of the coating layer of the coated electrode was 23 µm. In Comparative Example 7, the thickness of the coating layer of the coated electrode was 50 µm. In Comparative Example 8, the thickness of the coating layer of the coated electrode was 71 µm.

### [Rate Property]

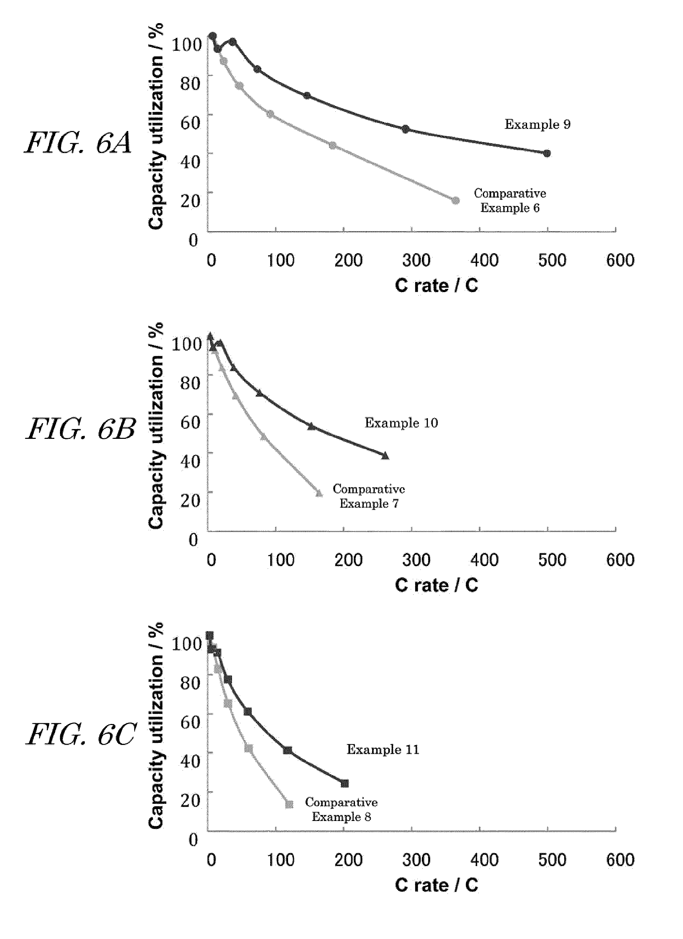

Charge and discharge measurement at an electrode potential of 1.0 to 3.0 V and a C rate range of 1 to 500 C was performed on cells of Examples 9 to 11 and Comparative Examples 6 to 8 prepared as such, and results as shown in Figure 6 were obtained. Figures 6A, 6B and 6C show the capacity utilization in the C rate range. Figure 6A is a rate property comparison between Example 9 and Comparative Example 6, Figure 6B is a rate property comparison between Example 10 and Comparative Example 7, and Figure 6C is a rate property comparison between Example 11 and Comparative Example 8.

From Figures 6A, 6B and 6C, by comparing Comparative Examples 6 to 8 utilizing an organic binder as the binder with Examples 9 to 11 with CNT added as the binder, it is seen that when the thickness of the sheet composite and the thickness of the coating layer are the same, Examples 9 to 11 show higher evaluation in rate property.

From the above, by adding a fibrous carbon as the binder to a composite material of LTO as the metal compound and a carbon material, a sheet composite as well as an electrode and an electrochemical element employing the sheet composite having high rate property can be formed regardless of the thickness of the sheet composite.

### [Sixth Property Comparison (Property Comparison by Thickness of Sheet Composite)]

In the sixth property comparison, the property comparison was made according to the thickness of the sheet composites prepared. Example 12 and Comparative Example 9 used in the sixth property comparison are as follows. In this property comparison, LTO is used as the metal compound, CNF is used as the carbon material, and CNT is used as the fibrous carbon added as the binder to the composite material.

### (Example 12)

In Example 12, the thickness of the sheet composites formed in Example 4 were each set.

### (Comparative Example 9)

In Comparative Example 9, the thickness of the coating layer of the coated electrode having CMC as the binder was each set similarly to Comparative Example 2.

### [Rate Property]

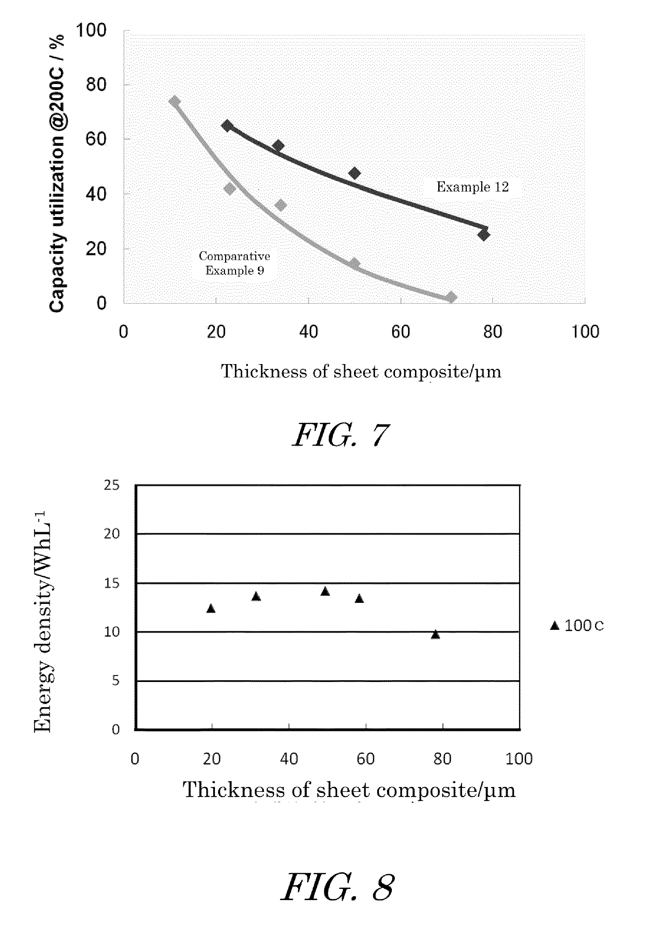

Charge and discharge measurement at an electrode potential of 1.0 to 3.0 V and a C rate of 200 C was performed on cells of Example 12 and Comparative Example 9 prepared as such, and results as shown in Figure 7 were obtained. Figure 7 shows the capacity utilization vs. the thickness of the sheet composite and the coating layer. Figure 7 is a rate property comparison between Example 12 and Comparative Example 9.

From Figure 7, regarding charge and discharge measurement at 200 C, it is seen that by comparing Comparative Example 9 utilizing an organic binder as the binder with Example 12 with CNT added as the binder, Example 12 shows a higher evaluation in rate property.

In particular, when the thickness of the sheet composite is less than 20 µm, the effect of adding CNT as the binder will become less. On the other hand, when the thickness of the sheet composite is greater than 50 µm, the rate property will be reduced as shown in Figure 7.

As described above, by adding a fibrous carbon as the binder to a composite material of LTO as the metal compound and a carbon material, a sheet composite as well as an electrode and an electrochemical element employing the sheet composite having high rate property can be formed regardless of the thickness of the sheet composite. Further, in light of the rate property, it is seen that the thickness of the sheet composite is desirably 20 µm to 50 µm.

### [Seventh Property Comparison (Property Comparison by Thickness of Sheet Composite at Each Rate)]

In the seventh property comparison, charge and discharge measurement at a C rate of 100 C was performed on the cells of Example 12. Figure 8 shows the energy density vs. the thickness of the sheet composite.

From Figure 8, regarding charge and discharge measurement at 100 C, it is seen that the energy density peaks when the thickness of the sheet composite is 50 µm. Moreover, it is seen that high energy density is also retained when the thickness of the sheet composite is 20 µm or 60 µm. The energy density will be decreased when the thickness of the sheet composite exceeds 60 µm and reaches to 80 µm. This is thought to be because when the thickness of the sheet composite becomes too large, resistance will be increased accordingly, and as a result energy density will be reduced. Consequently, it is preferred that the thickness of the sheet composite is 20 µm to 60 µm. Meanwhile, in light of the sixth property comparison (Figure 7), since the rate property will be more improved as the thickness of the sheet composite becomes thinner, it is most preferred that the thickness of the sheet composite is 20 µm to 40 µm in light of this rate property and the energy density of Figure 6.

As described above, by adding a fibrous carbon as the binder to a composite material of LTO as the metal compound and a carbon material, an electrochemical element employing a sheet composite having high rate property can be formed regardless of the thickness of the sheet composite. Further, regarding charge and discharge measurement at 100 C, it is seen that high energy density is also retained when the thickness of the sheet composite is 20 µm to 60 µm.

### DESCRIPTION OF SYMBOLS

- 1: Outer tube
- 1-2: Sheathing board
- 1-3: Inner wall
- 2: Inner tube
- 2-1: Through-holes

## Claims

1. A sheet composite comprising: a composite material of a metal compound capable of occluding and releasing lithium supported on a carbon material, the composite material being molded in a sheet-shape with a fibrous carbon binder comprising any of carbon nanotubes, carbon nanofibers, and carbon fibers having a specific surface area of less than 600 m²/g.

2. A sheet composite according to claim 1, wherein 7 wt% to 200 wt% of the fibrous carbon binder is added to the composite material.

3. A sheet composite according to claim 1 or 2, wherein the thickness of the sheet composite is 20 µm to 60 µm.

4. An electrode comprising:
a collector; and
a sheet composite according to any one of claims 1 to 3 formed on a surface of the collector.

5. An electrochemical element employing an electrode according to claim 4.

6. A method for manufacturing a sheet composite comprising:
a compositing treatment of obtaining a composite material having a metal compound capable of occluding and releasing lithium supported on a carbon material,
a stirring treatment of producing a mixed solution by stirring the composite material with a fibrous carbon binder comprising any of carbon nanotubes, carbon nanofibers and carbon fibers having a specific surface area of less than 600 m²/g, and
a sheeting treatment of molding the stirred mixed solution in a sheet-shape to obtain a sheet composite.

7. A method for manufacturing a sheet composite according to claim 6, wherein in the compositing treatment, sheer stress and centrifugal force is applied to a starting material for the metal compound capable of occluding and releasing lithium and a carbon material in a rotating reactor, and a mixture thereof is heated to obtain a composite material having a metal compound capable of occluding and releasing lithium supported on a carbon material.
